# EUROPÄISCHE PATENTANMELDUNG

(11) **EP 4 212 368 A2**
(43) Veröffentlichungstag der Anmeldung: **19.07.2023**
(21) Anmeldenummer: 23152303.6
(22) Anmeldetag: 18.01.2023
(51) Int. Cl.: B60H 1/00, F16L 9/21, F16L 55/033

(54) **KRAFTFAHRZEUG UND LUFTKANAL ZUM FÜHREN VON RAUMLUFT IN EINE ODER AUS EINER KABINE EINES KRAFTFAHRZEUGS**

(30) Priorität: 18.01.2022 DE 102022101107
(71) Anmelder: WOCO Industrietechnik GmbH, 63628 Bad Soden-Salmünster (DE)
(72) Erfinder: Nix, Matthias, 60594 Frankfurt am Main (DE)
(74) Vertreter: Schmid, Nils T.F.

(57) **Zusammenfassung**

Luftkanal (1) zum Führen von Raumluft in eine oder aus einer Kabine eines Kraftfahrzeugs für Insassen, wie Passagiere sowie gegebenenfalls einen Fahrer, wobei der Luftkanal (1) wenigstens ein Schallschutzelement umfasst.

## Beschreibung

Die vorliegende Erfindung betrifft einen Luftkanal zum Führen von Raumluft in eine oder aus einer Kabine eines Kraftfahrzeugs. Ferner betrifft die Erfindung ein Kraftfahrzeug mit einem solchen Luftkanal.

In Kraftfahrzeugen sind verschiedene luftführende Systeme vorgesehen. Bei Kraftfahrzeugen mit Verbrennungsmotoren ist das zum einen das Abgassystem, das den Motor mit wenigstens einem Auspuffrohr verbindet, um die im Verbrennungsmotor aus Kraftstoff und Umgebungsluft gebildeten Verbrennungsprodukte einschließlich Kohlenstoffmonooxid, Kohlenstoffdioxid, Stickoxiden und Schwefeldioxid auszustoßen. In dem Abgassystem sind üblicherweise Filter und Katalysatoren zur chemischen Abgasbehandlung vorgesehen. Um Geräuschemissionen infolge der mit dem Takt des Verbrennungsmotors korrespondierenden pulsartigen Abgasförderung zu minimieren, enthalten Abgassysteme typischerweise Schalldämpfer und mitunter Klappenventile. Kraftfahrzeuge mit Verbrennungsmotoren umfassen außerdem Ansaug- oder Frischluft-Systeme, durch welche der Verbrennungsmotor mit Umgebungsluft versorgt wird. Manche Ansaugsysteme enthalten oftmals als Turbolader bezeichnete Kompressoren. Um Geräuschemissionen aufgrund eines Turboladers oder eines dem Motortakt entsprechenden Saugvorgangs zu minimieren, können auch Frischluft-Systeme mit Schalldämpfern ausgestattet sein, wie beispielsweise in DE 103 41 319 A1 oder WO 2014 079704 A1 beschrieben.

Ferner sind Kraftfahrzeuge mit einem oder mehreren Luftsystemen zur Klimatisierung der Kabine des Kraftfahrzeugs für Insassen ausgestattet. Um das Eintreten von unangenehmen Gerüchen und giftigen Dämpfen und Gasen aus dem Bereich des Motors in die Kraftfahrzeug-Kabine auszuschließen, sind diese Raumluftsysteme zur Klimatisierung der Kabine getrennt von dem Abgas- und Ansaug-System. Von den Lärmquellen im Motorraum ist die Kabine und deren Raumluftsystem üblicherweise durch Schallschutzmatten abgeschirmt.

Es ist Aufgabe der vorliegenden Erfindung, die Nachteile aus dem bekannten Stand der Technik zu überwinden und einen verbesserten Schallschutz für Insassen in der Kabine eines Kraftfahrzeugs bereitzustellen.

Diese Aufgabe wird gelöst durch die Merkmale des unabhängigen Anspruchs.

Danach ist ein Luftkanal zum Führen von Raumluft in eine oder aus einer Kabine eines Kraftfahrzeugs für Insassen vorgesehen. Die Insassen des Fahrzeugs können beispielsweise Passagiere sowie gegebenenfalls ein Fahrer sein. Zweckmäßigerweise kann vorgesehen sein, dass der Luftkanal zum Führen von Raumluft frei von Hinterschnitten ist, weil sich an solchen Stellen gesundheitsschädliche Keime sammeln könnten. Erfindungsgemäß weist der Luftkanal wenigstens ein Schallschutzelement auf. Im Unterschied zu typischen Raumluftkanälen, die durch ihre räumliche Anordnung in einem akustisch vom Motorraum getrennten Bereich bislang auch ohne eigene Schallschutzelemente als hinreichend schallgeschützt betrachtet wurden, ist der erfindungsgemäße Luftkanal mit wenigstens einem eigenen Schallschutzelement ausgestattet und kann dadurch zu einem verbesserten Schallschutz für die Kabine eines Kraftfahrzeugs beitragen.

Gemäß einer bevorzugten Ausführung eines Luftkanals kann vorgesehen sein, dass das wenigstens eine Schallschutzelement den Luftkanal außenseitig zumindest abschnittsweise zumindest teilumfänglich ummantelt. Vorzugsweise ummantelt das wenigstens eine Schallschutzelement den Luftkanal außenseitig entlang einem Großteil der Längserstreckung des Luftkanals zumindest teilumfänglich. Der Großteil der Längserstreckung des Luftkanals kann wenigstens 50 %, insbesondere wenigstens 66 %, vorzugsweise mindestens 75 %, besonders bevorzugt mindestens 90 %, betragen. Die Längserstreckung des Luftkanals kann beispielsweise bestimmt werden als die Länge des Luftkanals von einem ersten Anschlussflansch zu einem gegenüberliegenden zweiten Anschlussflansch dieses Luftkanals. Der längliche Verlauf und damit die Längserstreckung des Luftkanals kann eine von einer geradlinigen Erstreckung abweichende Form, beispielsweise eine einfach oder mehrfach gekrümmte Form, wie eine L-Form, eine C-Form, eine S-Form oder Ähnliches aufweisen. Bei einem Luftkanal mit gekrümmter Form kann sich die Längserstreckung anhand der Mittelpunktlinie des Luftkanals bestimmen. Die zumindest teilumfängliche Ummantelung des Luftkanals durch das Schallschutzelement kann sich in einer Umfangsrichtung in Bezug auf die Längserstreckung des Luftkanals um wenigstens 60° oder wenigstens 90°, insbesondere wenigstens 180°, vorzugsweise wenigstens 270°, besonders bevorzugt wenigstens 300° erstrecken. Gemäß einer bevorzugten Ausführung ummantelt das Schallschutzelement den Luftkanal vollumfänglich. Der Luftkanal kann abschnittsweise mit dem Schallschutzelement teil- oder vollumfänglich ummantelt sein. Gemäß einer Ausführungsform kann vorgesehen sein, dass der Luftkanal nur bereichsweise mit dem Schallschutzelement ummantelt ist, also unvollständig in der Längsrichtung, der Umfangsrichtung, oder beiden. Eine bereichsweise Schallschutz-Ummantelung kann im Bereich besonderer Schallquellen oder Schallbrücken oder unter Leichtbaugesichtspunkten zweckmäßig sein.

Bei einer Ausführung eines Luftkanals umgibt das Schallschutzelement den Luftkanal koaxial. Beispielsweise kann das Schallschutzelement ringförmig um den Luftkanal und koaxial zur Mittelpunktlinie des Luftkanals vorgesehen sein.

Der Luftkanal weist gemäß einer zweckmäßigen Ausgestaltung eine mehrschichtige Kanalwand auf. Die mehrschichtige Kanalwand umfasst vorzugsweise zumindest eine innere Raumluft-Führungsschicht und eine Schallschutzschicht. Die Kanalwand weist vorzugsweise eine Wandstärke im Bereich von etwa 1 mm bis 10 mm, insbesondere 2 mm bis 5 mm, vorzugsweise etwa 3 mm auf. Die Schallschutzschicht kann beispielsweise eine Dicke von wenigstens 0,5 mm, insbesondere 1 mm oder mehr aufweisen. Es kann bevorzugt sein, dass die Dicke der Schallschutzschicht wenigstens ein Drittel der Wandstärke beträgt. Die Schallschutzschicht ist vorzugsweise mit einer Vielzahl von Hohlräumen ausgestattet. Beispielsweise kann die Schallschutzschicht eine Vielzahl von blasenartigen und/oder wabenartigen Hohlräumen aufweisen. Die Schallschutzschicht kann eine insbesondere regelmäßige Wabenstruktur aufweisen. In der Schallschutzschicht gebildete Waben können beispielsweise vieleckige, etwa dreieckige, viereckige oder sechseckige, Wabenquerschnitte aufweisen. Es kann bevorzugt sein, dass die Waben der Wabenstruktur der Schallschutzschicht zumindest überwiegend oder alle den gleichen Wabenquerschnitt aufweisen. Die Raumluft-Führungsschicht kann beispielsweise eine Dicke oder Stärke von wenigstens 0,1 mm, insbesondere wenigstens 0,5 mm oder 1 mm aufweisen. Vorzugsweise ist die Stärke der Raumluft-Führungsschicht nicht größer als ein Drittel der Wandstärke. Die Raumluft-Führungsschicht ist insbesondere an ihrer mit der Raumluft in Kontakt zu bringenden Oberfläche glatt. Die Raumluft-Führungsschicht des Luftkanals ist, insbesondere zumindest im Bereich des Schallschutzelements, frei von radialen Öffnungen. Vorzugsweise bildet die Raumluft-Führungsschicht eine wasser-, dampf- und/oder luftdichte Barriereschicht zwischen dem Luftkanal-Innenraum zum Führen der Raumluft und der Schallschutzschicht. Die Raumluft-Führungsschicht bildet, insbesondere unterbrechungsfrei, vorzugsweise die vollständige auf den Luftkanal-Innenraum zu weisende Oberfläche des Luftkanals. Es kann bevorzugt sein, dass die Raumluft-Führungsschicht eine antimikrobielle und/oder flüssigkeitsabweisende Oberfläche aufweist.

Gemäß einer Weiterbildung eines Luftkanals mit einer mehrschichtigen Kanalwand umfasst diese ferner wenigstens eine äußere Deckschicht, die die Raumluft-Führungsschicht und/oder die Schallschutzschicht, vorzugsweise außenumfänglich, umgibt. Insbesondere umgibt die äußere Deckschicht sämtliche mit einer Schallschutzschicht versehenen Bereiche des Luftkanals vollständig. Vorzugsweise umgibt die äußere Deckschicht den Luftkanal vollständig. Die Deckschicht kann beispielsweise eine Dicke von wenigstens 0,1 mm, insbesondere wenigstens 0,5 mm oder 1 mm aufweisen. Vorzugsweise ist die Dicke der Deckschicht nicht größer als ein Drittel der Wandstärke. Vorzugsweise bildet die Deckschicht eine wasser-, dampf- und/oder luftdichte Barriereschicht zwischen einerseits dem Luftkanal-Innenraum zum Führen der Raumluft und/ oder der Schallschutzschicht und andererseits der Umgebung, beispielsweise der Umgebungsluft im Motorraum.

Bei einer bevorzugten Weiterbildung eines Luftkanals mit einer äußeren Deckschicht ist diese aus wenigstens zwei Schalen, insbesondere Halbschalen zusammengesetzt. Eine Schale kann sich in Umfangsrichtung teilweise um den Luftkanal erstrecken, wobei die mehreren, insbesondere zwei, die Deckschicht bildenden Schalen vorzugsweise derart auf den Luftkanal abgestimmt sind, dass die Schalen gemeinsam zumindest die mit einer Schallschutzschicht verstehenden Bereiche des Luftkanals, insbesondere den vollständigen Luftkanal, vollumfänglich umgeben. Vorzugsweise umfasst der Luftkanal genau zwei die äußere Deckschicht bildenden Halbschalen, um eine schnelle und einfache Montage des Luftkanals zu gewährleisten. Es kann bevorzugt sein, dass die Schallschutzschicht, insbesondere eine Vielzahl wabenartiger Hohlräume, an einer radialen Innenseite der Schalen ausgebildet ist.

Eine zweckmäßige Weiterbildung des Luftkanals sieht vor, dass die Raumluft-Führungsschicht, die Deckschicht und/oder die Schallschutzschicht ein Elastomermaterial umfasst oder daraus besteht. Es kann bevorzugt sein, dass die Raumluft-Führungsschicht, die Deckschicht und/oder die Schallschutzschicht aus dem gleichen Material gebildet sind. Alternativ oder zusätzlich können die Raumluft-Führungsschicht, die Deckschicht und/oder die Schallschutzschicht vorzugsweise stoffschlüssig miteinander verbunden sein. Vorzugsweise ist das Elastomermaterial ausgewählt aus der Gruppe umfassend Ethylen-Propyläen-Dien-Kautschuk (EPDM), Hydrierter Acrylnitril-Butadien-Kautschuk (HNBR), Flur-Kautschuk (FKM), Ethylen-Acrylat-Kautschuk (AEM) und/oder Acrylat-Kautschuk (ACM).

Bei einer besonders bevorzugten Ausführung weist die Schallschutzschicht eine Vielzahl von Hohlräumen auf. Insbesondere erstrecken sich die Hohlräume zwischen der Raumluft-Führungsschicht und der äußeren Deckschicht. Vorzugsweise haben die Hohlräume eine runde und/oder polygonale, insbesondere dreieckige, viereckige, beispielsweise rechteckige oder trapezförmige, oder sechseckige Querschnittsform. Die Hohlräume können unterschiedliche Querschnittsformen aufweisen. Vorzugsweise haben die Hohlräume zumindest überwiegend oder alle die gleiche Querschnittsform. Vorzugsweise sind die Hohlräume gleich groß, es kann jedoch gemäß einer alternativen Ausgestaltung vorgesehen sein, dass verschieden große Hohlräume bereitgestellt sind. Die Querschnittsform der Hohlräume kann in einer Radialrichtung bestimmt sein, also in eine Richtung quer zur der Längserstreckungsrichtung des Luftkanals. Die Hohlräume der Schallschutzschicht sind bevorzugt vollständig durch die Raumluft-Führungsschicht, vorzugsweise wasser-, dampf- und/oder luftdicht, von dem raumluftführenden in den Bereich des Luftkanals separiert.

Der Luftkanal kann gemäß einer bevorzugten Weiterbildung einer Ausführung mit mehrschichtiger Kanalwand derart ausgestaltet sein, dass die Schallschutzschicht und/oder die Deckschicht an die Raumluft-Führungsschicht materialschlüssig angefügt, vorzugsweise anvulkanisiert, ist bzw. sind. Alternativ oder zusätzlich kann vorgesehen sein, dass die Schallschutzschicht und/oder die Raumluft-Führungsschicht materialschlüssig an die Deckschicht angefügt, insbesondere anvulkanisiert ist bzw. sind. Es kann bevorzugt sein, dass die Schallschutzschicht gemeinsam mit entweder der Deckschicht oder der Raumluft-Führungsschicht materialschlüssig oder materialeinheitlich urformend hergestellt, beispielsweise teilvulkanisiert und/oder gegossen, insbesondere spritzgegossenen, ist und die wenigstens eine übrige Schicht anschließend daran befestigt, beispielsweise angeklebt, angeschweißt oder vorzugsweise anvulkanisiert, ist.

Die Erfindung betrifft auch ein Kraftfahrzeug mit wenigstens einer Fahrzeugbatterie, wie einer Traktionsbatterie, einer Starterbatterie oder dergleichen, einer Kabine für Insassen, wie Passagiere sowie gegebenenfalls einen Fahrer, und wenigstens einen Luftkanal, der wie oben beschrieben gebildet ist und der sich von der Kabine zu der wenigstens einen Fahrzeugbatterie erstreckt. Die Fahrzeugbatterien ist vorzugsweise außerhalb der Kabine angeordnet, sie kann beispielsweise im Motorraum untergebracht sein. Es kann vorgesehen sein, dass mehrere Fahrzeugbatterien durch denselben Luftkanal oder verschiedene Luftkanäle mit der Fahrzeugkabine verbunden sind. Eine Fahrzeugbatterie oder eine Gruppe von Fahrzeugbatterie in kann kreislaufartig als Teil des Klimasystems mit der Kabine verbunden sein, wobei zwei oder mehr Luftkanäle, die wie oben beschrieben ausgeführt sind, Verwendung finden können. Beispielsweise kann ein erster Luftkanal in dem Klimasystem vorgesehen sein, um Luft aus der Fahrzeugkabine zu der Fahrzeugbatterie zu führen und ein zweiter Luftkanal kann vorgesehen sein, um Raumluft von der Fahrzeugbatterie zurück in die Fahrzeugkabine zu führen. Vorzugsweise ist der Luftkanal zum Führen von Raumluft vollständig getrennt von dem Abgassystem des Kraftfahrzeugs und/oder dem Ansaugsystem des Kraftfahrzeugs.

Gemäß einer bevorzugten Ausführung eines Kraftfahrzeugs befindet sich die wenigstens eine Fahrzeugbatterie zumindest abschnittsweise mit wenigstens einem Luftwärmetauscherkanal in Kontakt. Der wenigstens eine Luftwärmetauscherkanal erstreckt sich entlang einer Oberfläche oder durch einen Hüllkörper der Fahrzeugbatterie hindurch. Der Luftkanal verbindet diesen Luftwärmetauscherkanal mit der Kabine. Mit einer derartigen Anordnung kann Wärme aus dem Bereich der Fahrzeugkabine zu der Fahrzeugbatterie geführt werden oder von der Fahrzeugbatterie abgeführt werden.

Gemäß einer anderen Ausführung eines Kraftfahrzeugs, die mit der vorigen kombinierbar ist, ist wenigstens ein Fördermittel, wie eine Pumpe, zum Fördern von Raumluft durch den Luftkanal von der Kabine zu der wenigstens einen Fahrzeugbatterie und/oder wenigstens ein Rückschlagventil an oder in dem Luftkanal vorgesehen. Das Fördermittel und/oder das wenigstens eine Rückschlagventil können der Steuerung einer gewünschten Menge an Raumluft dienen und/oder dazu ausgelegt sein, unerwünschte Luftströme an aus Richtung von der Fahrzeugbatterie in die Kabine zu unterbinden.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: ein schematischer Teilschnitt durch einen erfindungsgemäßen Luftkanal gemäß einer ersten Ausführung;
- Figur 2: eine perspektivische Darstellung von zwei Halbschalen für einen Luftkanal gemäß einer zweiten Ausführung entsprechend der in Figur 3 dargestellten;
- Figur 3: eine perspektivische Darstellung der zweiten Ausführung eines erfindungsgemäßen Luftkanals; und
- Figur 4: eine Explosionsansicht einer dritten Ausführung eines erfindungsgemäßen Luftkanals.

Ein erfindungsgemäßer Luftkanal mit Schallschutzelement ist in den nachfolgenden Abbildungen Bevorzugte Ausführungen der Erfindung im Allgemeinen mit Bezugszeichen 1 versehen.

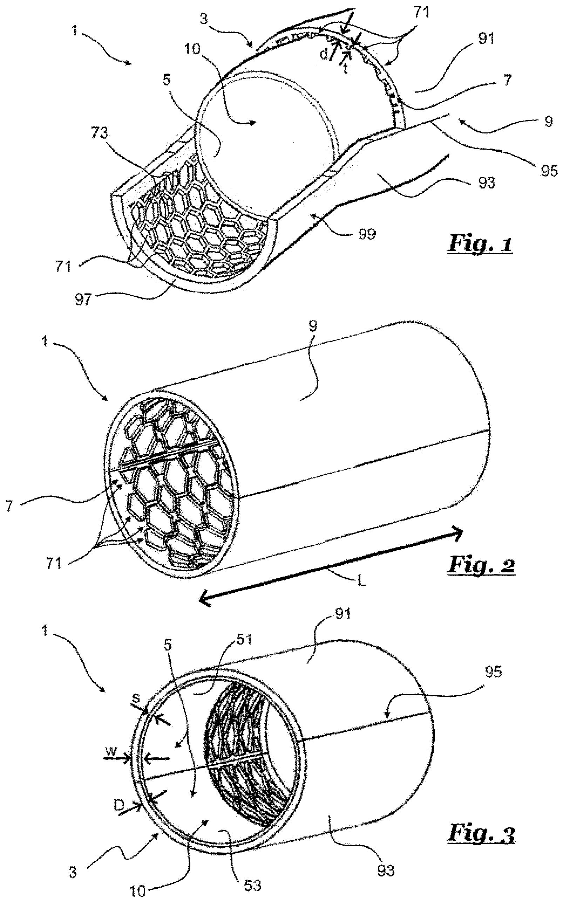

Figur 1 zeigt einen Teilschnitt durch einen Luftkanal 1 mit einem Winkel. Die Innenseite des Luftkanals 1 ist durch eine schlauchartige Raumluft-Führungsschicht 5 gebildet. Die Raumluft-Führungsschicht 5 ist umgeben von zwei Halbschalen 91,93. Die Halbschalen 91, 93 bilden eine vollumfängliche Deckschicht 9, die die Außenseite des Luftkanals 1 entlang dessen gesamter Längserstreckung bildet. An der radialen Innenseite der Halbschalen 91, 93 ist eine Vielzahl wabenartiger Hohlräume 71 geformt, die eine Schallschutzschicht 7 für den Luftkanal 1 bilden. Die Querschnittsbreite der Hohlräume liegt im Bereich 1/100 bis ¼, insbesondere im Bereich 1/20 bis 1/10, des Durchmessers es Luftkanals 1.

Durch den Luftkanal 1 wandernder Schall wird durch Luftpolster oder schallabsorbierendes Material im Bereich der Hohlräume 71, die als Kammern bezeichnet sein können, gedämpft und somit eine Geräuschübertragung in den Fahrzeuginnenraum reduziert. Bei der hier abgebildeten Ausführung sind an der Innenseite der Schalen 91, 93 Strukturen, beispielsweise wie abgebildet durch Profilwände 73, gebildet, um Luftpolsterkammern 71 zu realisieren. Die Schalen 91, 93 können einem Werkzeug an den die Raumluft-Führungsschicht 5 bildenden Schlauch anvulkanisiert werden, wobei eine Vielzahl zwischen der Innenseite und der Außenseite des Luftkanals 1 eingebettete Luftpolsterkammern 71 gebildet werden.

Die erste Halbschale 91 kann als Oberteil und die zweite Halbschale 93 als Unterteil betrachtet werden. Die radiale Außenseite der Halbschalen 91, 93 kann glatt sein. Die Halbschalen 91 und 93 sind im Wesentlichen zylindrisch mit halbkreisförmigem Querschnitt und zueinander formkomplementären, gegenüberliegenden Verbindungskanten 95. Entlang der Verbindungskanten 95 wie auch entlang der Stirnkanten 97 ist ein Umfangsrahmen gebildet. Der Umfangsrahmen ist in Querrichtung bzw. Radialrichtung bezüglich der Längserstreckung des Luftkanals 1 massiv. Die radiale Dicke D des Umfangsrahmens kann mehr als die Hälfte der Wandstärke des Luftkanals 1 ausmachen.

Umgeben vom Umfangsrahmen erstrecken sich an der Innenseite der Halbschalen 91, 93 eine Vielzahl radialer Einbuchtungen, die Hohlräume 71 in dem Luftkanal 1 bilden. Die Hohlräume 71 haben eine wabenförmige Gestalt, die gebildet ist durch Profilwände 73, die sich an der Innenseite der Halbschalen 91, 93 erheben. Die regelmäßige (hier: sechseckige) Querschnittsgestalt der Hohlräume 71 ist im Bereich des Umfangsrands durch die Verbindungskante 95 und die Stirnkante 97 unterbrochen. Im Bereich der Hohlräume haben die Halbschalen 91 und 93 eine radiale Dicke d von beispielsweise 1 mm oder nicht mehr als einem Drittel der Wandstärke w des Luftkanals 1. Die radiale Tiefe t der Hohlräume 71 kann beispielsweise 1 mm nicht weniger als ein Drittel der Wandstärke des Luftkanals 1 betragen. Es kann bevorzugt sein, dass die radiale Dicke d der durch die Halbschalen 91 oder 93 gebildeten Deckschicht 9 im Bereich der Hohlräume kleiner oder gleich der radialen Tiefe t der Hohlräume 71 ist, die die Schalldämpfungskammern und somit eine Schallschutzschicht 7 bilden. In den Hohlräumen kann ein schallabsorbierendes Material angeordnet sein.

Zwischen den in Umfangsrichtung oder in Längsrichtung benachbarten Hohlräumen 71 stehen Profilwände 73 radial hervor, die die Hohlräume 71 voneinander trennen. Es ist klar, dass bei einer alternativen (nicht abgebildet) Ausführung, noppen- oder kammartig nebeneinander angeordnete Profilwände vorgesehen sein können, welche keine vollständige Trennung benachbarter Hohlräume 71 voneinander bewirken. Im Bereich der Profilwände 73 kann die gleiche radiale Dicke D der Halbschalen 91, 93 wie im Bereich des Umfangsrahmens vorgesehen sein.

Die Raumluft-Führungsschicht 5 kann durch einen in die Halbschalen 91, 93 eingesetzten Schlauch gebildet sein, der an die Halbschalen 91, 93 im Bereich des Umfangsrahmens und der Profilwende 73 angebunden, beispielsweise anvulkanisiert, ist. Die radiale Stärke s der Raumluft-Führungsschicht 5 kann etwa 1 mm und/oder weniger als ein Drittel der Wandstärke w betragen. Der Raumluft-Führungsschlauch 5 bzw. die Raumluft-Führungsschicht 5 ist für die Raumluft sowie eventuell darin vorhandene Luftfeuchtigkeit, die beispielsweise als Dampf oder tropfenförmigen ausfallen kann, undurchlässig. Der durch die Hohlräume 71 realisierte Schallschutz ist durch die Raumluft-Führungsschicht 5 vom Innenraum 10 des Kanals 1 getrennt.

Es sei klar, dass die hier abgebildeten und oben beschrieben Halbschalen 91, 93 exemplarisch für Schalen beliebiger Gestalt und Form stehen können, die aufeinander formabgestimmt sind, um eine Deckschicht 9 des Luftkanals 1 zu bilden. Abweichend von der abgebildeten Ausführung, bei der die Hohlräume 71 an der Innenseite der Deckschicht 9 materialeinheitlich angeformt sind, ist es alternativ oder zusätzlich denkbar, dass Hohlräume, eine andere Schallschutzschicht, beispielsweise eine Schaumstoffschicht, oder ein andersartiges Schallschutzelement an der Umfangsaußenseite der Raumluft-Führungsschicht 5, vorzugsweise materialeinheitlich, angeformt sind und/oder das wenigstens ein Schallschutzelement als separate Einlage zum Anordnen zwischen der Raumluft-Führungsschicht 5 und der Deckschicht 9 vorgesehen ist (nicht näher dargestellt).

Die Figuren 2 und 3 zeigen eine zweite alternative Ausgestaltung eines erfindungsgemäßen Luftkanals 1. Von dem zuvor bezüglich Figur 1 beschriebenen Luftkanal 1 unterscheidet sich der in den Figuren 2 und 3 abgebildete lediglich durch die ideal-hohlzylindrische Form ohne Knick oder Biegung. In Figur 2 ist exemplarisch die Längserstreckung L des Luftkanals 1 dargestellt, die entsprechend der Mittelpunktlinie des Kanals verläuft.

Die Hohlräume 71 des Luftkanals 1 der zweiten Ausführung haben unterschiedliche Größen. In Richtung der Längserstreckung L sind abwechselnd ringförmige Gruppen großer sechseckiger Hohlräume 71 und kleinerer sechseckige Hohlräume 71 angeordnet. Die Raumluft-Führungsschicht 5 ist unterteilt in zwei Sektionen 51, 53, die, wie in Figur 3 zu erkennen, jeweils an den Innenseiten der einzelnen Halbschalen 91 oder 93 angebracht sind. Die Trennkante 95 verläuft entlang einer Trennebene, relativ zu der die gegenüberliegen Halbschalen 91, 93 mit den daran an geformten Führungsschicht-Sektionen 51, 53 spiegelsymmetrisch gebildet und angeordnet sind.

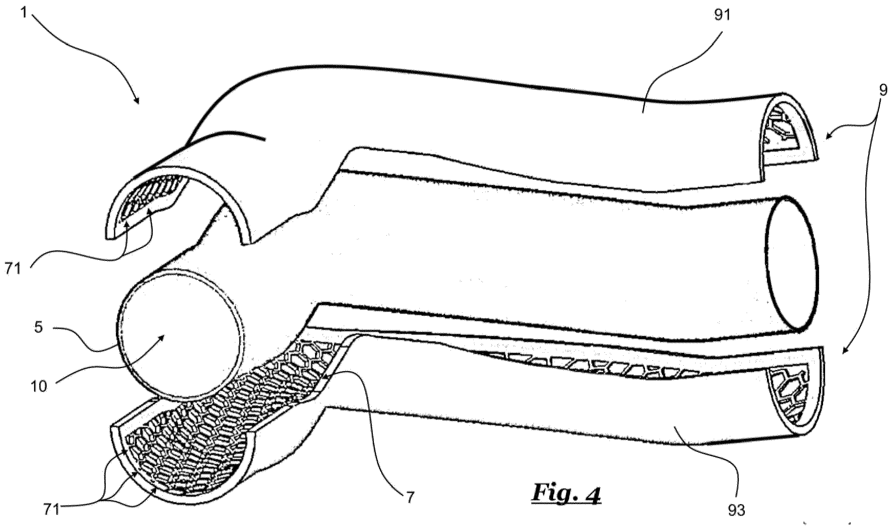

Von den bezüglich der vorigen Figuren beschriebenen Ausführungen eines Luftkanals 1 unterscheidet sich der in Figur 4 abgebildete im Wesentlichen nur durch seine L-förmige Gestalt. Zur Vermeidung von Wiederholungen wird auf die obigen Erläuterungen bezüglich der ersten Ausführung verwiesen.

Der Luftkanal 1 kann beispielsweise eine lichte Weite von etwa 27 mm aufweisen und eine Wandstärke von etwa 3 mm haben, die sich in je 1 mm dicke Abschnitte für die Stärke s der Raumluft-Führungsschicht 5, die Tiefe t der Schallschutzschicht der Schallschutzschicht 7 und die Dicke d der Deckschicht 9 unterteilen.

Der Schlauch, der die Raumluft-Führungsschicht 5 bildet, ist vorzugsweise aus einem Elastomermaterial gebildet. Die Schallschutzschicht 7 und die Deckschicht 9 können aus dem gleichen oder einem anderen Material, insbesondere einem Elastomermaterial, gebildet sein. Wenn der Luftkanal 1 in einer Einbausituation in einem Kraftfahrzeug einem kurvigen oder anderen gekürzten Verlauf folgen soll, kann es bevorzugt sein, dass der Luftkanal 1 mit der entsprechenden Formgestalt hergestellt ist. Bei der Verwendung eines Elastomermaterials für zumindest einen Teil des Luftkanals 1 kann eine gewisse Biegsamkeit zum Toleranzausgleich an angrenzende Bauteile gewährleistet sein.

Der innere Schlauch 5 und die äußeren Halbschalen 91, 93 sind hier aus Elastomermaterialien hergestellt. Hier können z.B. verschiedene Typen der gleichen Materialsorte zur Verbesserung der akustischen Eigenschaften eingesetzt werden, beispielsweise kann der innere Schlauch 5 ist weicher sein als die äußere Deckschicht 9 und/oder eine andere Dichte aufweisen. Für verschiedene Schichten der Wand des Luftkanals 1 können unterschiedliche Materialien (z.B. EPDM, HNBR, FKM, AEM, ACM) beispielsweise entsprechend unterschiedlicher Medienbeständigkeitsanforderungen ausgewählt sein.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### BEZUGSZEICHEN

- 1: Luftkanal
- 3: Kanalwand
- 5: Raumluft-Führungsschicht
- 7: Schallschutzschicht
- 9: Deckschicht
- 10: Innenraum
- 71: Hohlraum
- 73: Profilwand
- 91, 93: Halbschale
- 95: Verbindungskante
- 97: Stirnkante
- 99: Außenseite

- L: Längserstreckung
- w: Wandstärke
- d: radiale Dicke im Bereich der Hohlräume
- s: Stärke der Raumluft-Führungsschicht
- t: Tiefe
- D: radiale Dicke des Umfangsrahmens

## Patentansprüche

1. Luftkanal (1) zum Führen von Raumluft in eine oder aus einer Kabine eines Kraftfahrzeugs für Insassen, wie Passagiere sowie gegebenenfalls einen Fahrer, **gekennzeichnet durch** wenigstens ein Schallschutzelement.

2. Luftkanal (1) nach Anspruch 1, **dadurch gekennzeichnet, dass** das wenigstens eine Schallschutzelement den Luftkanal (1) außenseitig zumindest abschnittsweise, vorzugsweise entlang einem Großteil der Längserstreckung (L) des Luftkanals (1), zumindest teilumfänglich, vorzugsweise vollumfänglich, ummantelt.

3. Luftkanal (1) nach Anspruch 1 oder 2, **dadurch gekennzeichnet, dass** das Schallschutzelement den Luftkanal (1) koaxial umgibt.

4. Luftkanal (1) nach einem der vorstehenden Ansprüche, **dadurch gekennzeichnet, dass** der Luftkanal (1) eine mehrschichtige Kanalwand (3) aufweist, die zumindest eine innere Raumluft-Führungsschicht (5) und eine Schallschutzschicht (7) umfasst.

5. Luftkanal (1) nach Anspruch 4, **dadurch gekennzeichnet, dass** die Kanalwand (3) ferner eine äußere Deckschicht (9) umfasst, die die Raumluft-Führungsschicht (3) und die Schallschutzschicht (5) umgibt.

6. Luftkanal (1) nach Anspruch 5, **dadurch gekennzeichnet, dass** die Deckschicht (9) aus wenigstens zwei Schalen, insbesondere Halbschalen (91, 93), zusammengesetzt ist.

7. Luftkanal (1) nach einem der Ansprüche 4 bis 6, **dadurch gekennzeichnet, dass** die Raumluft-Führungsschicht (5) und/oder die Deckschicht (9) ein Elastomermaterial umfasst oder daraus besteht, wobei vorzugsweise das Elastomermaterial ausgewählt ist aus der Gruppe umfassend EPDM, HNBR, FKM, AEM und ACM.

8. Luftkanal (1) nach einem der Ansprüche 4 bis 7, **dadurch gekennzeichnet, dass** die Schallschutzschicht (7) eine Vielzahl von Hohlräumen (71) aufweist, die insbesondere sich zwischen der Raumluft-Führungsschicht (5) und der äußeren Deckschicht (9) erstrecken, wobei vorzugsweise die Hohlräume (71) eine runde und/oder polygonale, insbesondere dreieckige, viereckige, beispielsweise trapezförmige, oder sechseckige, Querschnittsform aufweisen.

9. Luftkanal (1) nach einem der Ansprüche 4 bis 8, **dadurch gekennzeichnet, dass** die Schallschutzschicht (7) und/oder die Deckschicht (9) an die Raumluft-Führungsschicht (5) materialschlüssig angefügt, vorzugsweise anvulkanisiert, ist bzw. sind.

10. Kraftfahrzeug mit wenigstens einer Fahrzeugbatterie, wie einer Traktionsbatterie, einer Starterbatterie oder dergleichen, einer Kabine für Insassen, wie Passagiere sowie gegebenenfalls einen Fahrer, **gekennzeichnet durch**
wenigstens einen Luftkanal (1), insbesondere nach einem der vorigen Ansprüche, der sich von der Kabine zu der wenigstens einen Fahrzeugbatterie erstreckt.

11. Kraftfahrzeug nach Anspruch 10, wobei sich die wenigstens eine Fahrzeugbatterie zumindest abschnittsweise mit wenigstens einem Luftwärmetauscherkanal in Kontakt befindet, wobei der wenigstens eine Luftwärmetauscherkanal sich entlang einer Oberfläche oder durch einen Hüllkörper der Fahrzeugbatterie erstreckt, und wobei der Luftkanal (1) den Luftwärmetauscherkanal mit der Kabine verbindet.

12. Kraftfahrzeug nach Anspruch 10 oder 11, **gekennzeichnet durch** wenigstens ein Fördermittel, wie eine Pumpe, zum Fördern von Raumluft durch den Luftkanal (1) von der Kabine zu der wenigstens einen Fahrzeugbatterie und/oder wenigstens ein Rückschlagventil an oder in dem Luftkanal (1).
